# EUROPÄISCHE PATENTSCHRIFT

(11) **EP 3 971 471 B1**
(45) Veröffentlichungstag und Bekanntmachung des Hinweises auf die Patenterteilung: **03.01.2024**
(21) Anmeldenummer: 20197234.6
(22) Anmeldetag: 21.09.2020
(51) Int. Cl.: F21S 41/663, B60Q 1/14, F21W 102/155, F21W 102/18, F21W 102/19

(54) **BELEUCHTUNGSEINRICHTUNG FÜR EINEN KRAFTFAHRZEUGSCHEINWERFER ZUR ERZEUGUNG EINER BASISLICHTVERTEILUNG MIT SIGNLIGHT**
LIGHTING DEVICE FOR A MOTOR VEHICLE HEADLAMP FOR GENERATING A BASE LIGHT DISTRIBUTION WITH SIGNLIGHT
DISPOSITIF D'ÉCLAIRAGE POUR UN PROJECTEUR DE VÉHICULE AUTOMOBILE PERMETTANT DE CRÉER UNE DISTRIBUTION DE LUMIÈRE DE BASE COMPRENANT UN FAISCEAU D'ILLUMINATION DES PANNEAUX

(43) Veröffentlichungstag der Anmeldung: 23.03.2022
(73) Patentinhaber: ZKW Group GmbH, 3250 Wieselburg (AT)
(72) Erfinder: Brauner, Nina, 3033 Altlengbach (AT); Stöger, Bernhard, 3250 Wieselburg (AT); Kronberger, Florian, 3250 Wieselburg/Erlauf (AT); Pühringer, Jakob, 3370 Ybbs (AT)
(74) Vertreter: Patentanwaltskanzlei Matschnig & Forsthuber OG

(56) Entgegenhaltungen:
- EP-A1- 3 179 158
- EP-A2- 2 058 585
- EP-B1- 2 058 585
- DE-A1-102013 207 850
- DE-A1-102014 221 815
- DE-A1-102018 131 027
- US-A1- 2013 294 101
- US-A1- 2019 383 460

## Beschreibung

Die Erfindung betrifft eine Beleuchtungseinrichtung für einen Kraftfahrzeugscheinwerfer bzw. für ein Kraftfahrzeug, wobei die Beleuchtungseinrichtung umfasst:
- eine Basislicht-Beleuchtungsvorrichtung zur Erzeugung von einer oder mehreren, sogenannten ersten, Basislichtverteilung bzw. Basislichtverteilungen, wobei die Basislicht-Beleuchtungsvorrichtung eine oder mehrere Basis-Lichtquellen umfasst, wobei die erste Basislichtverteilung bzw. die ersten Basislichtverteilungen keine Fernlichtverteilung und keine Teil-Fernlichtverteilung ist bzw. sind,
- eine Zusatzlicht-Beleuchtungsvorrichtung, welche dazu eingerichtet ist, eine Zusatz-Lichtverteilung zu erzeugen, wobei die Zusatzlicht-Beleuchtungsvorrichtung eine oder mehrere Zusatz-Lichtquellen umfasst, und wobei
   o entweder die Zusatz-Lichtverteilung eine Fernlichtverteilung ist,
   o oder die Zusatz-Lichtverteilung eine Lichtverteilung ist, welche gemeinsam mit einer von der Basislicht-Beleuchtungsvorrichtung erzeugten, ersten Basislichtverteilung eine weitere, sogenannte zweite Basislichtverteilung oder eine Fernlichtverteilung bildet, wobei die zweite Basislichtverteilung unterschiedlich zu dieser ersten Basislichtverteilung und unterschiedlich zu der Fernlichtverteilung ist,

und wobei die Beleuchtungseinrichtung in einem ersten Betriebszustand betrieben werden kann,
   - in welchem, wenn die Zusatz-Lichtverteilung eine Fernlichtverteilung ist, lediglich die Zusatzlicht-Beleuchtungsvorrichtung zur Erzeugung einer Fernlichtverteilung aktiviert ist, oder
   - in welchem, wenn die Zusatz-Lichtverteilung eine Lichtverteilung ist, welche gemeinsam mit der von der Basislicht-Beleuchtungsvorrichtung erzeugten ersten Basislichtverteilung eine Fernlichtverteilung oder eine zweite Basislichtverteilung bildet, zur Erzeugung einer Fernlichtverteilung oder der zweiten Basislichtverteilung die Zusatzlicht-Beleuchtungsvorrichtung und die Basislicht-Beleuchtungsvorrichtung gemeinsam aktiviert sind,
und wobei die Beleuchtungseinrichtung in einem zweiten Betriebszustand betrieben werden kann, in welchem die Basislicht-Beleuchtungsvorrichtung zur Erzeugung einer bzw. der ersten Basislichtverteilung aktiviert ist, wobei
in dem zweiten Betriebszustand die Zusatzlicht-Beleuchtungsvorrichtung derart betrieben ist, dass eine oder mehrere der Zusatz-Lichtquellen der Zusatz-Beleuchtungsvorrichtung gegenüber dem ersten Betriebszustand gedimmt betrieben sind und/oder ein oder mehrere Zusatz-Lichtquellen der Zusatz-Beleuchtungsvorrichtung ausgeschaltet sind. Solche Beleuchtungseinrichtungen werden in EP 3 179 158 A1 und in EP2 058 585 A2 gezeigt.

Weiters betrifft die Erfindung einen Kraftfahrzeug-Scheinwerfer für ein Kraftfahrzeug, wobei der Kraftfahrzeug-Scheinwerfer ein oder mehrere solcher Beleuchtungseinrichtungen aufweist.

Nach den gesetzlichen Bestimmungen haben Lichtverteilungen von Fahrzeugscheinwerfern eine Reihe von Voraussetzungen zu erfüllen.

Zum Beispiel werden nach ECE oder SAE für Fahrzeugscheinwerfer bestimmte, ortsabhängige Beleuchtungsstärken gefordert, die - jeweils für Abblendlicht und Fernlicht - anhand einer Reihe von Messpunkten vorgegeben werden. Bezüglich des Abblendlichtes sind dabei neben Beleuchtungsstärken bzw. Lichtstärke-Werten für das auf die Straße unterhalb der sogenannten Hell-Dunkel-Grenze ("HD-Grenze") auftreffende Licht, das die sogenannte "Abblendlichtverteilung" bildet, auch spezielle Anforderungen bezüglich der Beleuchtungsstärken bzw. Lichtstärke-Werte oberhalb der Hell-Dunkel-Grenze zu erfüllen. Dieser oberhalb der HD-Grenze liegende Bereich der Lichtverteilung wird als Overhead- oder Signlight-Bereich (im Folgenden als "Signlight" oder "Signlight-Bereich" tituliert) bezeichnet. Dieses Signlight ermöglicht beispielsweise das Aus- oder Anleuchten von Überkopf-Wegweisern, sodass diese für den Fahrer des Kraftfahrzeuges sichtbar oder besser sichtbar sind.

Die Messpunkte für das sogenannte Signlight bei Abblendlicht erstrecken sich typischerweise bis zu vier Grad oberhalb der sogenannten 0°-0°-Linie, die den Horizont markiert, und werden durch Mindestwerte und Maximalwerte der dort zulässigen Beleuchtungsstärken bzw. Lichtstärke-Werte charakterisiert.

Die verwendeten Lichtstärken liegen üblicherweise über den üblichen Streulichtwerten aber bei weitem unter den Lichtstärken unterhalb der HD-Linie. Die geforderten Lichtstärke-Werte müssen mit möglichst geringer Blendwirkung erzielt werden.

Signlight ist neben Abblendlicht auch bei einer Reihe von AFS-Lichtfunktionen vorgesehen bzw. gesetzlich vorgeschrieben.

Signlight wird üblicherweise durch spezielle Optiken, z.B. Facetten, auf einer Lichtaustrittsfläche eines optischen Elementes, etwa einer Projektionslinse realisiert. Diese Optiken sind oftmals von Außen sichtbar und daher zunehmend aus Designgründen unerwünscht. Signlight kann auch durch diskrete, kleine Erhebungen realisiert werden, wobei sich hier insbesondere der Nachteil ergibt, dass diese Strukturen von außen als helle Lichtpunkte wahrnehmbar sind und daher ebenfalls vor allem aus Designgründen zunehmend abgelehnt werden. Außerdem sind derartige Vorrichtungen auf das dahinterliegende optische System abgestimmt - werden daran Änderungen vorgenommen, ist die angestrebte Funktion nicht mehr sichergestellt.

Eine andere Lösung zur Erzeugung von Signlight besteht in der Verwendung speziell geformter Kollimator-Optiken, welche einerseits eine Basislichtverteilung, z.B. eine Abblendlichtverteilung, und andererseits auch Signlight erzeugen können. Nachteilig an dieser Variante ist, dass einerseits die Kollimatoren oftmals vergleichsweise aufwändig ausgestaltet werden müssen und/oder andererseits nicht universell für beliebige Lichtmodul-Konzepte eingesetzt werden können.

Es ist eine Aufgabe der Erfindung, eine Lösung zur Erzeugung von Signlight anzugeben, bei welcher die oben beschriebenen Nachteile des Stands der Technik ausgeräumt sind.

Bei der vorliegenden Beleuchtungseinrichtung ist erfindungsgemäß vorgesehen, dass die Zusatzlicht-Beleuchtungsvorrichtung in dem zweiten Betriebszustand derart gedimmt ist, dass die erzeugte Zusatz-Lichtverteilung geforderte Lichtstärke-Werte für Signlight erfüllt. Es kann entsprechend vorgesehen sein, dass Minimal/Maximalwerte, die in gewissen Punkten/Bereichen der Basis-Lichtverteilung gefordert sind, erfüllt sind, wenn in dem zweiten Betriebszustand die beiden Beleuchtungsvorrichtungen, d.h. Zusatzlicht-Beleuchtungsvorrichtung und Basis-Beleuchtungsvorrichtung, wie gefordert aktiviert sind. Die "zweite Gesamtlichtverteilung" bezeichnet dabei die von der Beleuchtungseinheit im zweiten Betriebszustand erzeugte Lichtverteilung.

Die "erste Gesamtlichtverteilung" bezeichnet die von der Beleuchtungseinrichtung im ersten Betriebszustand erzeugte Lichtverteilung, z.B. eine Fernlichtverteilung.

Vorteilhafte Ausgestaltungen der Erfindung sind in den abhängigen Ansprüchen beschrieben.

Die im Folgenden beschriebenen vorteilhaften Ausgestaltungen können jede für sich sofern in beliebiger Kombination miteinander - sofern nicht explizit ausgeschlossen - realisiert werden.

Bei den Lichtquellen, z.B. den Zusatz-Lichtquellen und/oder den Basis-Lichtquellen, kann es sich um Lichtquellen im Sinne von Leuchtmitteln handeln, wobei ein Leuchtmittel eine Glühlampe, Halogen- oder Xenonlampe, oder insbesondere eine oder mehrere Leuchtdioden/LED's umfasst.

Insbesondere kann es sich bei diesen Lichtquellen auch um eigene Baueinheiten handeln, die z.B. jeweils eine eigene Teil-Lichtverteilung oder ein Segment einer Lichtverteilung bilden. Der Begriff "Lichtquelle" umfasst hier ein oder mehrere Leuchtmittel, etwa LED's, sowie eine optische Vorrichtung, z.B. einen Lichtleitkörper, (in den das oder die Leuchtmittel Licht über eine Lichteintrittsfläche einkoppelt bzw. einkoppeln, und welches, nach dem es sich z.B. in Folge von Reflexion oder Totalreflexion in dem Lichtleitkörper fortgepflanzt hat, über eine Lichtaustrittsfläche austritt und z.B. einen Teil oder ein Segment einer Lichtverteilung bildet), einen Reflektor, eine Projektionslinse bzw. eine Projektionslinsenvorrichtung, etc. oder mögliche Kombinationen aus solchen Elementen, und wobei die optische Vorrichtung das von dem oder den Leuchtmitteln emittierte Licht als Lichtverteilung (z.B. als Basislichtverteilung), oder als Teillichtverteilung oder als Lichtsegment einer Lichtverteilung abbildet.

Insbesondere die Zusatz-Beleuchtungsvorrichtung umfasst vorzugweise mehrere solcher Lichtquellen, sodass die Zusatz-Lichtverteilung aus einer Anzahl bzw. mehreren Lichtsegmenten bzw. mehreren Teil-Lichtverteilungen aufgebaut ist, welche entweder aneinander angrenzen oder sich in ihren Grenzbereichen überlappen, sodass durch Dimmen und/oder Ausschalten von Zusatz-Lichtquellen die Lichtmenge, die in einen bestimmten Bereich auf der Fahrbahn abgestrahlt wird, den gewünschten Lichtstärke-Werte angepasst werden kann.

Die erste Basislichtverteilung kann prinzipiell von einer einzigen Lichtquelle, etwa auch einem klassischen Projektionssystem (etwa Leuchtmittel plus Projektionslinse und/oder Reflektor, plus gegebenenfalls eine Blendenvorrichtung z.B. zur Erzeugung einer Hell-Dunkel-Grenze) erzeugt werden, kann aber auch mittels mehrerer Lichtquellen erzeugt werden.

Der Fall, dass die Zusatz-Beleuchtungsvorrichtung derart betrieben wird, dass sie in unterschiedlichen von ihr beleuchteten Bereichen im Vergleich zum ersten Betriebszustand unterschiedliche, insbesondere geringere, Lichtstärkewerte erzeugt, ist insbesondere dann interessant, wenn die Zusatz-Beleuchtungsvorrichtung z.B. eine Laserscanner-Vorrichtung zur Erzeugung der Zusatz-Lichtverteilung ist, bei der die gesamte Zusatz-Lichtverteilung von einer einzigen Zusatz-Lichtquelle erzeugt wird, wobei diese aber derart angesteuert werden kann, dass zielgerichtet in unterschiedlichen beleuchteten Bereichen die gewünschten Lichtstärkewerte eingestellt werden können.

Es kann vorgesehen sein, dass die erste Basislichtverteilung eine Abblendlichtverteilung oder eine AFS-Lichtverteilung, mit Ausnahme einer Fernlichtverteilung, ist, wobei beispielsweise die Abblendlichtverteilung oder die AFS-Lichtverteilung vorgeschriebene Werte für Signlight nicht erfüllt.

Lichtverteilungen, die mit einem sogenannten Adaptive Frontlighting System, "AFS", erzeugt werden können, werden als AFS-Lichtverteilung bezeichnet. Im vorliegenden Zusammenhang werden als AFS-Lichtverteilungen alle AFS-Lichtverteilungen, mit Ausnahme von Fernlicht, verstanden, beispielsweise:
- Stadtlichtverteilung
- Schlechtwetterlichtverteilung
- Autobahnlichtverteilung
- Landstraßenlichtverteilung
- Adaptive Kurvenlichtverteilung
- Abblendlichtverteilung mit adaptiver Hell-Dunkel-Grenze

Erfindungsgemäß ist vorgesehen, dass die Zusatzlicht-Beleuchtungsvorrichtung zwei oder mehrere Zusatzlicht-Lichtquellen umfasst und dazu eingerichtet ist, die Zusatz-Lichtverteilung aus zwei oder mehreren Teil-Lichtverteilungen aufzubauen, wobei jede Teil-Lichtverteilung mit jeweils einer der Zusatzlicht-Lichtquellen erzeugt wird, und wobei zumindest eine der Zusatzlicht-Lichtquellen, vorzugsweise mehrere der Zusatzlicht-Lichtquellen, vorzugsweise jede Zusatzlicht-Lichtquelle, unabhängig von anderen, insbesondere unabhängig von allen anderen Zusatzlicht-Lichtquellen angesteuert, insbesondere ein- und ausgeschaltet sowie gedimmt werden kann.

Diese Teil-Lichtverteilungen (oder Lichtsegmente) können unmittelbar aneinander angrenzen oder die Teil-Lichtverteilungen, insbesondere einander benachbarte Teil-Lichtverteilungen können einander überlappen.

Es wird vorgesehen, dass die Zusatzlicht-Beleuchtungsvorrichtung in dem zweiten Betriebszustand derart betrieben ist, dass in einer oder mehreren Teil-Lichtverteilungen der Zusatz-Lichtverteilung die Lichtstärke-Werte unterschiedlich stark reduziert ist bzw. sind, für jede Teil-Lichtverteilung jeweils betrachtet in Relation zu dem Lichtstärke-Wert, der in dieser Teil-Lichtverteilung im ersten Betriebszustand erzeugt wird.

Vorzugsweise ist die Beleuchtungseinrichtung derart eingerichtet, dass die Zusatzlicht-Beleuchtungsvorrichtung in dem zweiten Betriebszustand derart betrieben werden kann, dass eine oder mehrere Zusatzlicht-Lichtquellen, aber nicht alle Zusatzlicht-Lichtquellen abgeschaltet sind.

Es kann vorgesehen sein, dass die Zusatzlicht-Beleuchtungsvorrichtung in dem zweiten Betriebszustand derart betrieben ist, dass eine oder mehrere Zusatzlicht-Lichtquellen, aber nicht alle Zusatzlicht-Lichtquellen in Bezug auf den ersten Betriebszustand nicht gedimmt sind.

Auch wenn Zusatz-Beleuchtungsvorrichtung gedimmt, d.h. mit geringerer Leistung betrieben ist, bedeutet dies, dass es möglich ist, dass einzelne Zusatz-Lichtquellen vollständig abgeschaltet werden und/oder manche Zusatz-Lichtquellen nicht gedimmt werden, sodass manche Teil-Lichtverteilungen nach wie vor dieselben Lichtstärke-Werte aufweisen wie im ersten Betriebszustand. Ebenso kann vorgesehen sein, dass manche Zusatz-Lichtquellen in Bezug auf den ersten Betriebszustand unverändert betrieben werden, während manche Zusatz-Lichtquellen gedimmt und/oder manche Zusatz-Lichtquellen abgeschaltet sind.

Erfindungsgemäß wird vorgesehen, dass die Zusatzlicht-Beleuchtungsvorrichtung in dem zweiten Betriebszustand derart betrieben wird, dass die eine oder die mehreren Zusatzlicht-Lichtquellen, welche jeweils in einem Bereich liegen, in welchem in einem Isocandela-Diagramm der Punkt HV liegt, stärker gedimmt sind als andere, insbesondere alle anderen Zusatzlicht-Lichtquellen, welche Teil-Lichtverteilungen bilden, welche jeweils in einem Bereich oder in Bereichen liegen, welche den Punkt HV nicht umfassen.

Bevorzugt wird nicht die gesamte Fernlichtverteilung als Ganzes gleichmäßig gedimmt, sondern es wird vorgesehen, dass zentrale Bereiche der Lichtverteilung, etwa im Bereich um HV, stärker gedimmt werden (exakt gesprochen jene Zusatz-Lichtquellen, welche den oder die entsprechenden Bereiche um HV beleuchten), sodass das gesetzlich erlaubte Streulicht im Punkt HV nicht überschritten wird.

Es ist für den Fachmann klar, dass unter dem Begriff "Bereich dimmen" oder "Lichtverteilung dimmen" generell verstanden wird, dass die Lichtstärke im jeweiligen Bereich (der Lichtverteilung) verringert wird.

Weiters kann vorgesehen sein, dass die Zusatzlicht-Beleuchtungsvorrichtung in dem zweiten Betriebszustand derart betrieben wird, dass die von der Zusatzlicht-Beleuchtungsvorrichtung oder der Zusatzlicht- Beleuchtungsvorrichtung und der Basislicht-Beleuchtungsvorrichtung gemeinsam erzeugte maximale Lichtstärke im Signlight Bereich einen Wert von 625 cd nicht überschreitet und/oder die im Punkt HV erzeugte Lichtstärke maximal 400cd beträgt.

Beispielsweise ist vorgesehen, dass wenn die Beleuchtungsvorrichtung für Rechtsverkehr vorgesehen ist, wobei die Zusatzlicht-Beleuchtungsvorrichtung in dem zweiten Betriebszustand derart betrieben wird, dass die von der Zusatzlicht-Beleuchtungsvorrichtung oder der Zusatzlicht-Beleuchtungsvorrichtung und der Basislicht-Beleuchtungsvorrichtung gemeinsam erzeugte Lichtstärke im Punkt P7, der bei H: -8° und V: 0° liegt, zumindest 65 cd und/oder im Punkt P8 (bei H: -4°, V: 0°) zumindest 125cd beträgt. Bei Linksverkehr sind die Intensitätswerte ident wie bei Rechtsverkehr, die Lage der Punkte P7, P8 ist um die vertikale Achse V-V gespiegelt.

Allgemein ist vorzugsweise vorgesehen, dass gegenüber Fernlicht sowohl im Punkt HV als auch in den Punkten P7 und P8 gedimmt wird, wobei im Punkt HV gegenüber den Punkten P7 und P8 noch stärker gedimmt wird.

Grundsätzlich gilt, dass, je höherauflösend das System, d.h. insbesondere die Beleuchtungsvorrichtung zur Erzeugung des Zusatzlichtes ist, umso besser die Lichtstärke-Werte angepasst werden können. Beispielsweise kann bereits einer segmentartigen Erzeugung der Zusatzlichtverteilung bzw. der Fernlicht- oder Teilfernlichtverteilung ("Segmentlight") bereits eine sehr gute Einstellung erzielt werden. Bei einer pixelartigen Erzeugung("Pixellight") der Zusatzlichtverteilung oder bei Verwendung eines DLP zur Erzeugung der Zusatzlichtverteilung kann die Auflösung und somit die Einstellung der Lichtstärke-Werte noch zielgerichteter erfolgen.

Ein ungleichmäßiges Dimmen, d.h. ein stärkeres Dimmen in bestimmten Bereichen, z.B. von einzelnen zentralen Pixeln, wird umso genauer und besser möglich, je höher auflösend zumindest die Zusatzlichtverteilung erzeugt wird.

Es kann vorgesehen sein, dass die Beleuchtungseinrichtung eine Steuerungsvorrichtung umfasst oder der Beleuchtungseinrichtung eine Steuerungsvorrichtung zugeordnet ist, welche dazu eingerichtet ist, den ersten oder zweiten Betriebszustand der Beleuchtungseinrichtung einzuschalten oder zwischen den beiden Betriebszuständen umzuschalten sowie die Beleuchtungseinrichtung auszuschalten.

Es kann vorgesehen sein, dass die erste Basislichtverteilung in Form eines statischen oder dynamischen Kurvenlichtes verschwenkt werden kann, und wobei in dem zweiten Betriebszustand die Zusatzlicht-Beleuchtungsvorrichtung derart betrieben ist, dass geforderte Lichtstärke-Werte für Signlight, insbesondere für Signlight für die verschwenkte erste Basislichtverteilung erfüllt sind. Insbesondere kann in diesem Fall die Zusatzlichtverteilung entsprechend der verschwenkten ersten Basislichtverteilung horizontal und/oder vertikal verschwenkt werden.

Im Folgenden ist die Erfindung an Hand der Zeichnung näher erläutert. In dieser zeigt
Fig. 1 schematisch eine Abblendlichtverteilung mit Signlight,
Fig. 2 schematisch eine Fernlichtverteilung, erzeugt aus einer Abblendlichtverteilung und einer Teilfernlichtverteilung, welche die Abblendlichtverteilung zu einer Fernlichtverteilung ergänzt,
Fig. 3 ausgehend von Figur 2 die Abblendlichtverteilung und die gedimmte Fernlichtverteilung,
Fig. 4 ein Beispiel für eine erfindungsgemäße Beleuchtungseinrichtung in einer grob schematischen Ansicht von Vorne,
Fig. 5 die Beleuchtungseinrichtung aus Figur 4 in einer grob schematischen perspektivischen Ansicht von schräg hinten, und
Fig. 6 eine Lichtverteilung, erzeugt mit einer erfindungsgemäßen Beleuchtungseinrichtung.

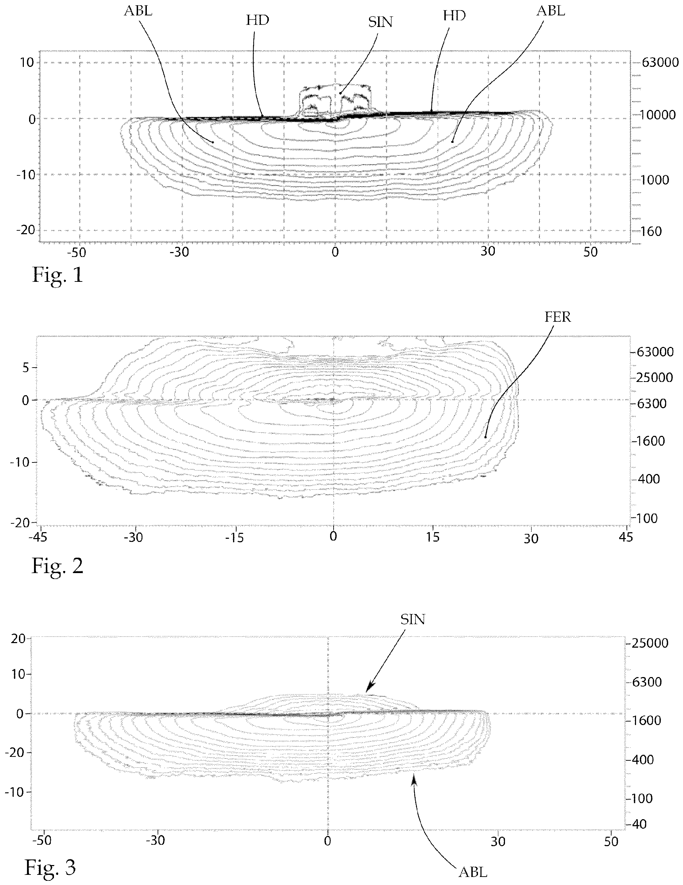

**Figur 1** zeigt ein Isocandela-Diagramm für eine typische Abblendlichtverteilung ABL für Rechtsverkehr. Zu erkennen ist der - vereinfacht beschrieben - hauptsächlich unterhalb einer HD-Grenze HD ("Hell-Dunkel"-Grenze) liegende Lichtverteilungsanteil mit einem zum rechten Fahrbahnrand hin ansteigenden Asymmetrieanteil. Eine detaillierte Erörterung soll an dieser Stelle unterbleiben, da Abblendlichtverteilungen für einen Fachmann hinlänglich bekannt sind.

Weiters ist in **Figur 1** eine Signlight-Verteilung SIN zu erkennen, welche z.B. zur Beleuchtung von über der Hell-Dunkel-Linie liegenden Objekten, wie etwa Verkehrszeichen dient. Die Beleuchtungsstärke- bzw. Lichtstärkewerte für Signlight sind gesetzlich oder durch entsprechende Vorschriften vorgegeben, und diese Vorgaben für Signlight müssen erfüllt sein, damit das Abblendlicht (= Abblendlichtverteilung plus Signlight) den entsprechenden, insbesondere gesetzlichen, Erfordernissen entspricht.

**Figur 2** zeigt in bekannter Weise eine Fernlichtverteilung FER, bei welcher einerseits der von einer Abblendlichtverteilung beleuchtete Bereich beleuchtet wird, andererseits auch der über der HD-Linie liegende Bereich beleuchtet wird.

Häufig wird eine Fernlichtverteilung FER derart erzeugt, dass eine Beleuchtungseinrichtung für einen Kfz-Scheinwerfer oder ein Kfz-Scheinwerfer eine Basislicht-Beleuchtungsvorrichtung zur Erzeugung einer (ersten) Basislichtverteilung, wie etwa einer Abblendlichtverteilung ABL umfasst, sowie weiters eine Zusatzlicht-Beleuchtungsvorrichtung umfasst, welche dazu eingerichtet ist, eine Zusatzlichtverteilung TFL zu erzeugen, die gemeinsam mit der Abblendlichtverteilung ABL eine Fernlichtverteilung FER bildet.

Die vorliegende Erfindung basiert nun darauf, ausgehend von einer solchen Beleuchtungseinrichtung für einen Kfz-Scheinwerfer bzw. einem solchen Kfz-Scheinwerfer im Abblendlicht-Modus die Zusatzlicht-Beleuchtungsstärke zu "dimmen" oder teilweise abzuschalten, sodass die Zusatzlichtverteilung - wie in **Figur 3** schematisch dargestellt - nicht mehr eine die Abblendlichtverteilung ABL zum Fernlicht ergänzende Lichtverteilung erzeugt, sondern "lediglich" die geforderten Lichtstärke-Werte für Signlight SIN bereitstellt.

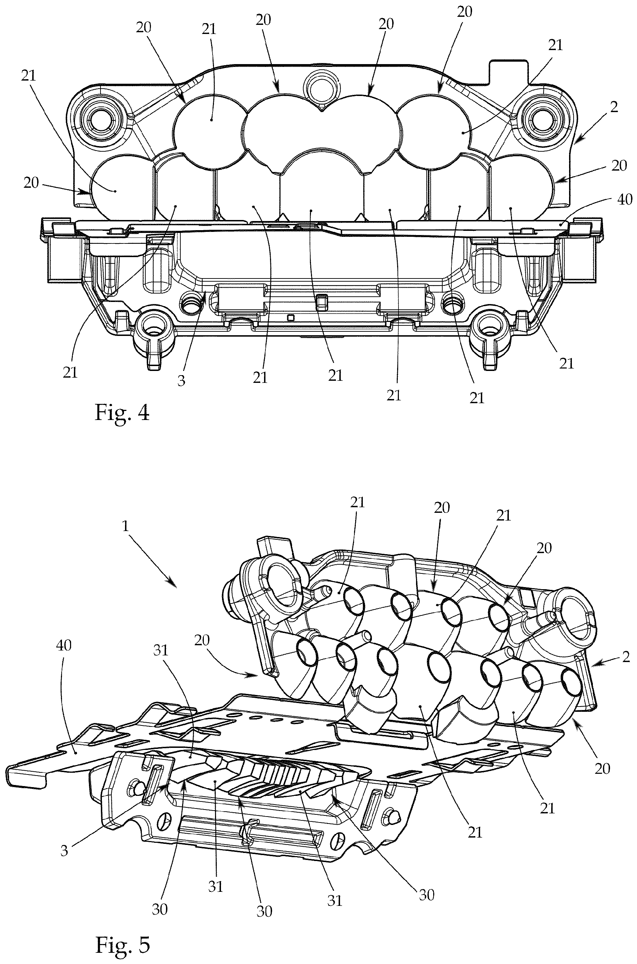

**Figur 4** und **Figur 5** zeigen ein Beispiel einer konkreten erfindungsgemäßen Beleuchtungseinrichtung 1 für einen Kraftfahrzeugscheinwerfer bzw. für ein Kraftfahrzeug in verschiedenen Ansichten. Die Beleuchtungseinrichtung 1 umfasst eine Basislicht-Beleuchtungsvorrichtung 2, die zur Erzeugung einer Basislichtverteilung, im konkreten Beispiel einer Abblendlichtverteilung, eingerichtet ist.

Die Basislicht-Beleuchtungsvorrichtung 2 umfasst ein oder mehrere Basis-Lichtquellen 20, im konkreten Beispiel elf solcher Basis-Lichtquellen 20. Bei Aktivierung dieser Basis-Lichtquellen 20 wird eine Abblendlichtverteilung ABL erzeugt.

Weiters umfasst die Beleuchtungseinrichtung 1 eine Zusatzlicht-Beleuchtungsvorrichtung 3, welche dazu eingerichtet ist, eine Zusatz-Lichtverteilung TFL zu erzeugen. Die Zusatzlicht-Beleuchtungsvorrichtung 3 umfasst ein oder vorzugsweise mehrere, im konkreten Beispiel neun Zusatz-Lichtquellen 30.

Die Zusatz-Lichtverteilung bildet dabei im konkreten Beispiel eine Teilfernlichtverteilung TFL, welche die Abblendlichtverteilung ABL zu einem Fernlicht FER ergänzt, sodass in einem ersten Betriebszustand, in dem die Basislicht-Beleuchtungsvorrichtung 2 aktiviert ist und weiters die Zusatzlicht-Beleuchtungsvorrichtung 3 aktiviert ist, eine Fernlichtverteilung FER gebildet wird.

In einem zweiten Betriebszustand ist die Beleuchtungseinrichtung 1 derart betrieben, dass die Basis-Beleuchtungsvorrichtung 2 wiederum eine Basislichtverteilung, d.h. in diesem konkreten Beispiel eine Abblendlichtverteilung ABL (analog zum ersten Betriebszustand) erzeugt, wobei allerdings in diesem zweiten Betriebszustand die Zusatzlicht-Beleuchtungsvorrichtung 3 derart betrieben ist, dass ein oder mehrere der Zusatz-Lichtquellen 30 der Zusatz-Beleuchtungsvorrichtung gegenüber dem ersten Betriebszustand gedimmt betrieben sind und/oder ein oder mehrere Zusatz-Lichtquellen 30 der Zusatz-Beleuchtungsvorrichtung 3 ausgeschaltet sind.

Dadurch wird in Summe nicht mehr eine Fernlichtverteilung gebildet, sondern durch den "gedimmten" Zustand der Zusatz-Beleuchtungsvorrichtung 3 stellt diese die für Signlight SIN erforderlichen Lichtstärkewerte bereit.

Bei den Lichtquellen, z.B. den Zusatz-Lichtquellen und/oder den Basis-Lichtquellen, kann es sich um Lichtquellen im Sinne von Leuchtmitteln handeln, wobei ein Leuchtmittel eine Glühlampe, Halogen- oder Xenonlampe, oder insbesondere eine oder mehrere Leuchtdioden/LED's umfasst.

Insbesondere kann es sich bei diesen Lichtquellen, wie in **Figur 4** und **Figur 5** gezeigt, auch um eigene Baueinheiten handeln, die z.B. jeweils eine eigene Teil-Lichtverteilung oder ein Segment einer Lichtverteilung bilden. Der Begriff "Lichtquelle" umfasst hier ein oder mehrere Leuchtmittel, etwa LED's, sowie eine optische Vorrichtung, z.B. einen Lichtleitkörper, (in den das oder die Leuchtmittel Licht über eine Lichteintrittsfläche einkoppelt bzw. einkoppeln, und welches, nach dem es sich z.B. in Folge von Reflexion oder Totalreflexion in dem Lichtleitkörper fortgepflanzt hat, über eine Lichtaustrittsfläche austritt und z.B. einen Teil oder ein Segment einer Lichtverteilung bildet), einen Reflektor, eine Projektionslinse bzw. eine Projektionslinsenvorrichtung, etc. oder mögliche Kombinationen aus solchen Elementen, und wobei die optische Vorrichtung das von dem oder den Leuchtmitteln emittierte Licht als Lichtverteilung (z.B. als Basislichtverteilung), oder als Teillichtverteilung oder als Lichtsegment einer Lichtverteilung abbildet.

Konkret umfassen in dem gezeigten Beispiel gemäß **Figur 4** und **Figur 5** die Basis-Lichtquellen 20 jeweils einen Optikkörper 21, beispielsweise einen TIR-Optikkörper, und LED's, wobei jedem Optikkörper 21 jeweils eine oder mehrere (der nicht dargestellten) LED's zugeordnet sind, welche in bekannter Weise Licht in den jeweiligen Optikkörper 21 über einen Lichteinkoppelbereich einkoppeln können. Das Licht pflanzt sich in den Optikkörpern 21 fort, z.B. mittels Totalreflexion, und tritt an einer Lichtauskoppelfläche des jeweiligen Optikkörpern 21 aus.

Alle Basis-Lichtquellen 20 zusammen erzeugen bei Aktivierung ihrer LED's die Abblendlichtverteilung, wobei zur Erzeugung der HD-Grenze in der Abblendlichtverteilung noch eine in Wesentlichen horizontal liegende Blende 40 vorgesehen sein kann, deren vordere Blendenkante als HD-Linie der Abblendlichtverteilung abgebildet wird, und insbesondere für den Asymmetrie-Knick in der HD-Linie sorgen kann.

Für die vorliegende Erfindung wäre es in Bezug auf die Erzeugung der Abblendlichtverteilung auch ausreichend, wenn lediglich eine einzige entsprechend geeignete Basis-Lichtquelle vorgesehen wäre, wenn diese im Stande ist, eine Abblendlichtverteilung zu erzeugen.

Die Zusatz-Lichtquellen 30 umfassen jeweils einen länglichen Lichtleitkörper 31 sowie ein oder mehrere (nicht dargestellte) LED's, welche in bekannter Weise Licht in den jeweiligen Lichtleitkörper 31 über eine Lichteinkoppelfläche einkoppeln können. Das Licht pflanzt sich in den jeweiligen Lichtleitkörpern 31 fort, z.B. mittels Totalreflexion, und tritt an einer Lichtauskoppelfläche des jeweiligen Lichtleitkörpers 31 aus.

In der gezeigten Ausführungsform kann die Zusatz-Beleuchtungsvorrichtung 3 eine Teilfernlichtverteilung erzeugen, mit einer im Lichtbild horizontalen Reihe von - im konkreten Fall neun - z.B. rechteckigen, nebeneinander liegenden Lichtsegmenten.

Alle Zusatz-Lichtquellen 30 zusammen erzeugen bei Aktivierung ihrer LED's im ersten Betriebszustand eine Teilfernlichtverteilung, sodass gemeinsam mit der Abblendlichtverteilung eine Fernlichtverteilung erzeugt wird.

Erfindungsgemäß wird in einem zweiten Betriebszustand der Beleuchtungseinrichtung 1 die Basis-Beleuchtungsvorrichtung 2 weiterhin so betrieben, dass sie die Abblendlichtverteilung erzeugt. Bei der Zusatz-Beleuchtungsvorrichtung hingegen werden ein oder mehrere Zusatz-Lichtquellen 30 "gedimmt", d.h. derart angesteuert, dass sie weniger Licht abstrahlen, oder gegebenenfalls werden ein oder mehrere Zusatz-Lichtquellen 30 auch abgeschaltet, sodass die Zusatz-Beleuchtungsvorrichtung 3 in Ergänzung zu der Abblendlichtverteilung ABL die erforderlichen Signlight-Lichtstärkewerte SIN bereitstellt.

Insbesondere wird vorgesehen, dass die in dem zweiten Betriebszustand gedimmten Zusatz-Lichtquellen 30 unterschiedlich stark gedimmt sind. Nicht erfindungsgemäß kann es aber auch vorgesehen sein, dass alle gedimmten Zusatz-Lichtquellen 30 gleich stark, z.B. auf dieselbe Helligkeit oder um dasselbe Ausmaß in Bezug auf ihren nicht gedimmten Zustand im ersten Betriebszustand, gedimmt sind.

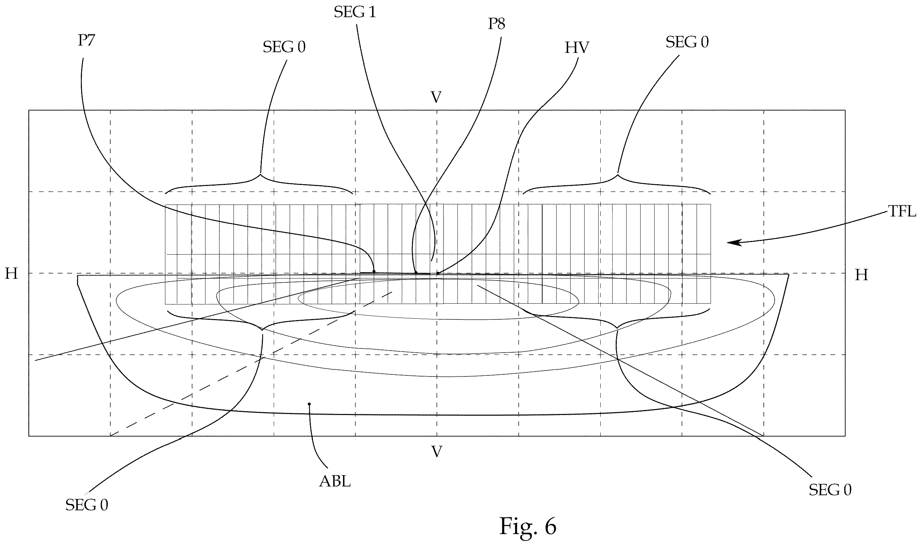

**Figur 6** zeigt schließlich noch eine Abblendlichtverteilung ABL (Basislichtverteilung bzw. erste Basislichtverteilung) und eine Teilfernlichtverteilung TFL (Zusatzlichtverteilung), wobei die Teilfernlichtverteilung TFL wesentlich höher auflösend ist, als sie mit einer Beleuchtungseinrichtung aus den **Figuren 4** und **5** erzeugt werden kann. Solche hochauflösenden Beleuchtungsvorrichtungen sind dem Fachmann hinlänglich bekannt.

Die Teilfernlichtverteilung TFL besteht aus zwei horizontalen, übereinander liegenden Reihen von in etwa rechteckförmigen Lichtsegmenten, wobei die untere Reihe zumindest teilweise mit der Abblendlichtverteilung überlappt bzw. überlappen kann.

Im zweiten Betriebsmodus wird nun die Zusatz-Beleuchtungsvorrichtung derart betrieben, dass die einzelnen Lichtsegmente entsprechend "gedimmt" oder abgeschaltet werden. Je höher auflösend dabei die Teilfernlichtverteilung TFL ist, umso zielgerichteter kann das Signlight SIN erzeugt werden.

Es ist für den Fachmann klar, dass unter dem Begriff "Lichtsegment dimmen" oder "Lichtsegment abschalten" generell verstanden wird, dass die Lichtstärke im jeweiligen Lichtsegment (der Lichtverteilung) verringert (in Bezug auf die Lichtstärke im 1.

Betriebszustand) oder auf Null gesetzt wird. Dies erfolgt z.B. bei einer Zusatz-Beleuchtungsvorrichtung, die vom Prinzip her wie in **Figur 4** **bzw. 5** gezeigt aufgebaut ist, indem die LED bzw. LED's, die Licht in jenen Lichtleiter einspeisen, der das entsprechende Lichtsegment erzeugt, gedimmt oder abgeschaltet werden.

Beispielsweise kann vorgesehen sein, dass die Zusatzlicht-Beleuchtungsvorrichtung 3 in dem zweiten Betriebszustand derart betrieben wird, dass die von der Zusatzlicht-Beleuchtungsvorrichtung 3 oder der Zusatzlicht-Beleuchtungsvorrichtung 3 und der Basislicht-Beleuchtungsvorrichtung 2 gemeinsam erzeugte maximale Lichtstärke im Signlight Bereich einen Wert von 625 cd nicht überschreitet und/oder die im Punkt HV erzeugte Lichtstärke maximal 400cd beträgt.

Dazu wird im zweiten Betriebszustand das Lichtsegment SEG1 entsprechend gegenüber dem ersten Betriebszustand gedimmt.

Weiters kann, insbesondere zusätzlich vorgesehen sein, dass wenn die Beleuchtungsvorrichtung für Rechtsverkehr vorgesehen ist, die Zusatzlicht-Beleuchtungsvorrichtung 3 in dem zweiten Betriebszustand derart betrieben wird, dass die von der Zusatzlicht-Beleuchtungsvorrichtung 3 oder der Zusatzlicht-Beleuchtungsvorrichtung 3 und der Basislicht-Beleuchtungsvorrichtung 2 gemeinsam erzeugte Lichtstärke im Punkt P7, der bei H: -8° und V: 0° liegt, zumindest 65 cd und/oder im Punkt P8 (bei H: -4°, V: 0°) zumindest 125cd beträgt.

Dazu werden Lichtsegmente entsprechend gedimmt, um diese Lichtstärkewerte zu erreichen.

Andere Lichtsegmente SEG0 werden beispielsweise vollständig abgeschaltet. Beispielsweise können alle Lichtsegmente außerhalb von +/-10° in horizontaler Richtung gesehen abgeschaltet werden.

Die bezeichneten Lichtsegmente sind lediglich exemplarisch hervorgehoben, natürlich ist es in der Regel auch noch notwendig, andere Lichtsegmente zu dimmen oder abzuschalten, um einerseits geforderte Minimal-Lichtstärkewerte für Signlight zu erreichen, und andererseits maximal erlaubte Maximal-Lichtstärkewerte nicht zu überschreiten.

## Patentansprüche

1. Beleuchtungseinrichtung (1) für einen Kraftfahrzeugscheinwerfer bzw. für ein Kraftfahrzeug, wobei die Beleuchtungseinrichtung (1) umfasst:
- eine Basislicht-Beleuchtungsvorrichtung (2) zur Erzeugung von einer oder mehreren, sogenannten ersten, Basislichtverteilung bzw. Basislichtverteilungen, wobei die Basislicht-Beleuchtungsvorrichtung (2) eine oder mehrere Basis-Lichtquellen (20) umfasst, wobei die erste Basislichtverteilung bzw. die ersten Basislichtverteilungen keine Fernlichtverteilung und keine Teil-Fernlichtverteilung ist bzw. sind,
- eine Zusatzlicht-Beleuchtungsvorrichtung (3), welche dazu eingerichtet ist, eine Zusatz-Lichtverteilung zu erzeugen, wobei die Zusatzlicht-Beleuchtungsvorrichtung (3) eine oder mehrere Zusatz-Lichtquellen (30) umfasst, und wobei
o entweder die Zusatz-Lichtverteilung eine Fernlichtverteilung ist,
o oder die Zusatz-Lichtverteilung eine Lichtverteilung ist, welche gemeinsam mit einer von der Basislicht-Beleuchtungsvorrichtung (2) erzeugten, ersten Basislichtverteilung eine weitere, sogenannte zweite Basislichtverteilung oder eine Fernlichtverteilung bildet, wobei die zweite Basislichtverteilung unterschiedlich zu dieser ersten Basislichtverteilung und unterschiedlich zu der Fernlichtverteilung ist,
und wobei die Beleuchtungseinrichtung (1) in einem ersten Betriebszustand betrieben werden kann,
- in welchem, wenn die Zusatz-Lichtverteilung eine Fernlichtverteilung ist, lediglich die Zusatzlicht-Beleuchtungsvorrichtung (3) zur Erzeugung einer Fernlichtverteilung aktiviert ist, oder
- in welchem, wenn die Zusatz-Lichtverteilung eine Lichtverteilung ist, welche gemeinsam mit der von der Basislicht-Beleuchtungsvorrichtung (2) erzeugten ersten Basislichtverteilung eine Fernlichtverteilung oder eine zweite Basislichtverteilung bildet, zur Erzeugung einer Fernlichtverteilung oder der zweiten Basislichtverteilung die Zusatzlicht-Beleuchtungsvorrichtung (3) und die Basislicht-Beleuchtungsvorrichtung (2) gemeinsam aktiviert sind,
und wobei die Beleuchtungseinrichtung (1) in einem zweiten Betriebszustand betrieben werden kann, in welchem die Basislicht-Beleuchtungsvorrichtung (2) zur Erzeugung einer bzw. der ersten Basislichtverteilung aktiviert ist, wobei
in dem zweiten Betriebszustand die Zusatzlicht-Beleuchtungsvorrichtung (3) derart betrieben ist, dass eine oder mehrere der Zusatz-Lichtquellen (30) der Zusatz-Beleuchtungsvorrichtung (3) gegenüber dem ersten Betriebszustand gedimmt betrieben sind und/oder ein oder mehrere Zusatz-Lichtquellen (30) der Zusatz-Beleuchtungsvorrichtung (3) ausgeschaltet sind, wobei
die Zusatzlicht-Beleuchtungsvorrichtung (3) in dem zweiten Betriebszustand derart gedimmt ist, dass die erzeugte Zusatz-Lichtverteilung geforderte Lichtstärke-Werte für Signlight erfüllt,
wobei die Zusatzlicht-Beleuchtungsvorrichtung (3) zwei oder mehrere Zusatzlicht-Lichtquellen (30) umfasst und dazu eingerichtet ist, die Zusatz-Lichtverteilung aus zwei oder mehreren Teil-Lichtverteilungen aufzubauen, wobei jede Teil-Lichtverteilung mit jeweils einer der Zusatzlicht-Lichtquellen (30) erzeugt wird, und wobei zumindest eine der Zusatzlicht-Lichtquellen (30), vorzugsweise mehrere der Zusatzlicht-Lichtquellen (30), vorzugsweise jede Zusatzlicht-Lichtquelle (30), unabhängig von anderen, insbesondere unabhängig von allen anderen Zusatzlicht-Lichtquellen (30) angesteuert, insbesondere ein- und ausgeschaltet sowie gedimmt werden kann,
**dadurch gekennzeichnet, dass**
die Zusatzlicht-Beleuchtungsvorrichtung (3) in dem zweiten Betriebszustand derart betrieben ist, dass die eine oder die mehreren Zusatzlicht-Lichtquellen (30), welche Teil-Lichtverteilungen bilden, welche jeweils in einem Bereich liegen, in welchem in einem Isocandela-Diagramm der Punkt HV liegt, stärker gedimmt sind als andere, insbesondere alle anderen Zusatzlicht-Lichtquellen (30), welche Teil-Lichtverteilungen bilden, welche jeweils in einem Bereich oder in Bereichen liegen, welche den Punkt HV nicht umfassen.

2. Beleuchtungseinrichtung nach Anspruch 1, wobei die erste Basislichtverteilung eine Abblendlichtverteilung oder eine AFS-Lichtverteilung, mit Ausnahme einer Fernlichtverteilung, ist, wobei beispielsweise die Abblendlichtverteilung oder die AFS-Lichtverteilung vorgeschriebene Werte für Signlight nicht erfüllt.

3. Beleuchtungseinrichtung nach einem der Ansprüche 1 oder 2, wobei die Zusatzlicht-Beleuchtungsvorrichtung (3) in dem zweiten Betriebszustand derart betrieben ist, dass eine oder mehrere Zusatzlicht-Lichtquellen (30), aber nicht alle Zusatzlicht-Lichtquellen (30) abgeschaltet sind.

4. Beleuchtungseinrichtung nach einem der Ansprüche 1 bis 3, wobei die Zusatzlicht-Beleuchtungsvorrichtung (3) in dem zweiten Betriebszustand derart betrieben ist, dass eine oder mehrere Zusatzlicht-Lichtquellen (30), aber nicht alle Zusatzlicht-Lichtquellen (30) in Bezug auf den ersten Betriebszustand nicht gedimmt sind.

5. Beleuchtungseinrichtung nach einem der Ansprüche 1 bis 4, wobei die Zusatzlicht-Beleuchtungsvorrichtung (3) in dem zweiten Betriebszustand derart betrieben wird, dass die von der Zusatzlicht-Beleuchtungsvorrichtung (3) oder der Zusatzlicht-Beleuchtungsvorrichtung (3) und der Basislicht-Beleuchtungsvorrichtung (2) gemeinsam erzeugte maximale Lichtstärke im Signlight Bereich einen Wert von 625 cd nicht überschreitet und/oder die im Punkt HV erzeugte Lichtstärke maximal 400cd beträgt.

6. Beleuchtungseinrichtung nach einem der Ansprüche 1 bis 5, wobei die Beleuchtungsvorrichtung für Rechtsverkehr vorgesehen ist, wobei die Zusatzlicht-Beleuchtungsvorrichtung (3) in dem zweiten Betriebszustand derart betrieben wird, dass die von der Zusatzlicht-Beleuchtungsvorrichtung (3) oder der Zusatzlicht-Beleuchtungsvorrichtung (3) und der Basislicht-Beleuchtungsvorrichtung (2) gemeinsam erzeugte Lichtstärke im Punkt P7, der bei -8°H und 0°V liegt, zumindest 65 cd und/oder im Punkt P8, der bei-4°H und 0°V liegt, zumindest 125cd beträgt.

7. Beleuchtungseinrichtung nach einem der Ansprüche 1 bis 6, wobei die Beleuchtungseinrichtung (1) eine Steuerungsvorrichtung umfasst oder der Beleuchtungseinrichtung (1) eine Steuerungsvorrichtung zugeordnet ist, welche dazu eingerichtet ist, den ersten oder zweiten Betriebszustand der Beleuchtungseinrichtung (1) einzuschalten oder zwischen den beiden Betriebszuständen umzuschalten sowie die Beleuchtungseinrichtung (1) auszuschalten.

8. Beleuchtungseinrichtung nach einem der Ansprüche 1 bis 7, wobei die erste Basislichtverteilung in Form eines statischen oder dynamischen Kurvenlichtes verschwenkt werden kann, und wobei in dem zweiten Betriebszustand die Zusatzlicht-Beleuchtungsvorrichtung (3) derart betrieben ist, dass geforderte Lichtstärke-Werte für Signlight, insbesondere für Signlight für die verschwenkte erste Basislichtverteilung erfüllt sind.

9. Kraftfahrzeugscheinwerfer mit zumindest einer Beleuchtungseinrichtung nach einem der Ansprüche 1 bis 8.

10. Kraftfahrzeugscheinwerfer nach Anspruch 9, wobei der Fahrzeugscheinwerfer eine Steuerungsvorrichtung aufweist, welche dazu eingerichtet ist, zumindest den ersten und zweiten Betriebszustand der Beleuchtungseinrichtung (1) einzuschalten oder zwischen den beiden Betriebszuständen umzuschalten sowie die Beleuchtungseinrichtung (1) auszuschalten.

## Claims

1. Lighting device (1) for a motor vehicle headlamp or for a motor vehicle, the lighting device (1) comprising:
- a basic light illumination device (2) for generating one or more, so-called first, basic light distribution(s), the basic light illumination device (2) comprising one or more basic light sources (20), the first basic light distribution(s) not being a high beam distribution and not being a partial high beam distribution,
- an auxiliary light illuminating device (3) adapted to generate an auxiliary light distribution, wherein the auxiliary light illuminating device (3) comprises one or more auxiliary light sources (30), and wherein
∘ either the auxiliary light distribution is a main beam light distribution,
∘ or the additional light distribution is a light distribution which together with a first base light distribution generated by the base light illumination device (2) forms a further, so-called second base light distribution or a main beam light distribution, wherein the second base light distribution is different from this first base light distribution and different from the main beam light distribution,
and wherein the lighting device (1) can be operated in a first operating state,
- in which, if the auxiliary light distribution is a main beam light distribution, only the auxiliary light illumination device (3) is activated to generate a main beam light distribution, or
- in which, if the auxiliary light distribution is a light distribution which together with the first base light distribution generated by the base light illumination device (2) forms a high beam light distribution or a second base light distribution, the auxiliary light illumination device (3) and the base light illumination device (2) are activated together for generating a high beam light distribution or the second base light distribution,
and wherein the lighting device (1) can be operated in a second operating state in which the base light illumination device (2) is activated for generating a or the first base light distribution, wherein
in the second operating state, the auxiliary light illumination device (3) is operated in such a way that one or more of the auxiliary light sources (30) of the auxiliary illumination device (3) are operated dimmed with respect to the first operating state and/or one or more auxiliary light sources (30) of the auxiliary illumination device (3) are switched off, wherein
the auxiliary lighting device (3) is dimmed in the second operating state in such a way that the generated auxiliary light distribution satisfies required luminous intensity values for Signlight,
wherein the additional light illumination device (3) comprises two or more additional light light sources (30) and is set up to build up the additional light distribution from two or more partial light distributions, wherein each partial light distribution is generated with one of the additional light light sources (30) in each case, and wherein at least one of the additional light light sources (30), preferably several of the additional light sources (30), preferably each additional light source (30), can be controlled, in particular switched on and off and dimmed, independently of others, in particular independently of all other additional light sources (30),
**characterized in that**
the auxiliary light illumination device (3) is operated in the second operating state in such a way that the one or more auxiliary light light sources (30) which form partial light distributions which each lie in an area in which the point HV lies in an isocandela diagram are dimmed more strongly than others, in particular all the other auxiliary light sources (30), which form partial light distributions which each lie in an area or in areas which do not include the point HV.

2. Lighting device according to claim 1, wherein the first basic light distribution is a low beam light distribution or an AFS light distribution, excluding a high beam light distribution, wherein for example the low beam light distribution or the AFS light distribution does not meet prescribed values for Signlight.

3. Lighting device according to any one of claims 1 or 2, wherein the auxiliary light lighting device (3) is operated in the second operating state such that one or more auxiliary light light sources (30), but not all auxiliary light sources (30), are switched off.

4. Lighting device according to any one of claims 1 to 3, wherein the additional light lighting device (3) is operated in the second operating state such that one or more additional light light sources (30), but not all additional light light sources (30), are not dimmed with respect to the first operating state.

5. Lighting device according to any one of claims 1 to 4, wherein the auxiliary light illumination device (3) is operated in the second operating state such that the maximum light intensity generated by the auxiliary light illumination device (3) or the auxiliary light illumination device (3) and the base light illumination device (2) together does not exceed a value of 625 cd in the signlight area and/or the light intensity generated in the point HV is at most 400cd.

6. Lighting device according to any one of claims 1 to 5, wherein the lighting device is provided for right-hand traffic, wherein the auxiliary light lighting device (3) is operated in the second operating state such, that the luminous intensity jointly generated by the auxiliary light illumination device (3) or the auxiliary light illumination device (3) and the base light illumination device (2) is at least 65 cd at the point P7 which is at -8°H and 0°V and/or at least 125cd at the point P8 which is at -4°H and 0°V.

7. Lighting device according to one of claims 1 to 6, wherein the lighting device (1) comprises a control device or a control device is assigned to the lighting device (1), which control device is set up to switch on the first or second operating state of the lighting device (1) or to switch between the two operating states and to switch off the lighting device (1).

8. Lighting device according to one of the claims 1 to 7, wherein the first basic light distribution can be pivoted in the form of a static or dynamic bend lighting, and wherein in the second operating state the auxiliary lighting device (3) is operated in such a way that required luminous intensity values for Signlight, in particular for Signlight for the pivoted first basic light distribution are fulfilled.

9. Motor vehicle headlamp having at least one lighting device according to any one of claims 1 to 8.

10. Motor vehicle headlamp according to claim 9, wherein the vehicle headlamp has a control device which is set up to switch on at least the first and second operating states of the lighting device (1) or to switch between the two operating states and to switch off the lighting device (1).

## Revendications

1. Dispositif d'éclairage (1) pour un projecteur de véhicule automobile, le dispositif d'éclairage (1) comprenant :
- un dispositif d'éclairage de base (2) pour générer une ou plusieurs distributions de lumière de base, dites premières, le dispositif d'éclairage de base (2) comprenant une ou plusieurs sources de lumière de base (20), la ou les premières distributions de lumière de base n'étant pas une distribution de lumière de route ni une distribution de lumière de route partielle,
- un dispositif d'éclairage auxiliaire (3) adapté pour générer une distribution de lumière auxiliaire, dans lequel le dispositif d'éclairage auxiliaire (3) comprend une ou plusieurs sources de lumière auxiliaire (30), et dans lequel
o soit la distribution de lumière supplémentaire est une distribution de lumière à distance,
o soit la distribution de lumière supplémentaire est une distribution de lumière qui, avec une première distribution de lumière de base générée par le dispositif d'éclairage de base (2), forme une autre distribution de lumière de base, dite deuxième distribution de lumière de base, ou une distribution de lumière lointaine, la deuxième distribution de lumière de base étant différente de cette première distribution de lumière de base et différente de la distribution de lumière lointaine,
et dans lequel le dispositif d'éclairage (1) peut être utilisé dans un premier état de fonctionnement,
- dans lequel, si la distribution de lumière auxiliaire est une distribution de lumière de route, seul le dispositif d'éclairage auxiliaire (3) est activé pour produire une distribution de lumière de route, ou
- dans lequel, lorsque la distribution de lumière auxiliaire est une distribution de lumière qui forme, conjointement avec la première distribution de lumière de base générée par le dispositif d'éclairage de base (2), une distribution de lumière à distance ou une deuxième distribution de lumière de base, le dispositif d'éclairage auxiliaire (3) et le dispositif d'éclairage de base (2) sont activés conjointement pour générer une distribution de lumière à distance ou la deuxième distribution de lumière de base,
et dans lequel le dispositif d'éclairage (1) peut fonctionner dans un deuxième état de fonctionnement dans lequel le dispositif d'éclairage de base (2) est activé pour produire une ou la première distribution de lumière de base, dans lequel
dans le deuxième état de fonctionnement, le dispositif d'éclairage supplémentaire (3) est actionné de telle sorte qu'une ou plusieurs des sources lumineuses supplémentaires (30) du dispositif d'éclairage supplémentaire (3) sont actionnées de manière atténuée par rapport au premier état de fonctionnement et/ou une ou plusieurs sources lumineuses supplémentaires (30) du dispositif d'éclairage supplémentaire (3) sont éteintes, dans lequel
le dispositif d'éclairage supplémentaire (3) est atténué dans le deuxième état de fonctionnement de telle sorte que la répartition de la lumière supplémentaire générée remplit les valeurs d'intensité lumineuse requises pour Signlight,
dans lequel le dispositif d'éclairage additionnel (3) comprend deux ou plusieurs sources de lumière additionnelles (30) et est agencé pour construire la distribution de lumière additionnelle à partir de deux ou plusieurs distributions de lumière partielles, chaque distribution de lumière partielle étant produite avec respectivement une des sources de lumière additionnelles (30), et dans lequel au moins l'une des sources de lumière supplémentaires (30), de préférence plusieurs des sources de lumière supplémentaires (30), de préférence chaque source de lumière supplémentaire (30), peut être commandée indépendamment des autres, en particulier indépendamment de toutes les autres sources de lumière supplémentaires (30), en particulier peut être activée et désactivée et peut être graduée,
**caractérisé en ce que**
le dispositif d'éclairage additionnel (3) est exploité dans le deuxième état de fonctionnement de telle sorte que la ou les sources lumineuses additionnelles (30) qui forment des répartitions partielles de lumière qui se trouvent respectivement dans une zone dans laquelle se trouve le point HV dans un diagramme d'Isocandela, sont plus fortement atténuées que les autres, en particulier toutes les autres sources lumineuses additionnelles (30) qui forment des répartitions partielles de lumière qui se trouvent respectivement dans une zone ou dans des zones qui ne comprennent pas le point HV.

2. Dispositif d'éclairage selon la revendication 1, dans lequel la première répartition de lumière de base est une répartition de lumière de croisement ou une répartition de lumière AFS, à l'exception d'une répartition de lumière de route, dans lequel, par exemple, la répartition de lumière de croisement ou la répartition de lumière AFS ne satisfait pas aux valeurs prescrites pour Signlight.

3. Dispositif d'éclairage selon l'une des revendications 1 ou 2, dans lequel le dispositif d'éclairage additionnel (3) fonctionne dans le deuxième état de fonctionnement de telle sorte qu'une ou plusieurs sources lumineuses additionnelles (30), mais pas toutes les sources lumineuses additionnelles (30), sont éteintes.

4. Dispositif d'éclairage selon l'une des revendications 1 à 3, dans lequel le dispositif d'éclairage additionnel (3) est actionné dans le deuxième état de fonctionnement de telle sorte qu'une ou plusieurs sources lumineuses additionnelles (30), mais pas toutes les sources lumineuses additionnelles (30), ne sont pas atténuées par rapport au premier état de fonctionnement.

5. Dispositif d'éclairage selon l'une quelconque des revendications 1 à 4, dans lequel le dispositif d'éclairage additionnel (3) fonctionne dans le deuxième mode de fonctionnement de telle sorte que l'intensité lumineuse maximale générée par le dispositif d'éclairage additionnel (3) ou par le dispositif d'éclairage additionnel (3) et le dispositif d'éclairage de base (2) conjointement ne dépasse pas une valeur de 625 cd dans la zone de signalisation et/ou que l'intensité lumineuse générée au point HV soit au maximum de 400 cd.

6. Dispositif d'éclairage selon l'une des revendications 1 à 5, dans lequel le dispositif d'éclairage est prévu pour la circulation à droite, le dispositif d'éclairage complémentaire (3) étant actionné dans le deuxième mode de fonctionnement de telle sorte que , de sorte que l'intensité lumineuse générée conjointement par le dispositif d'éclairage additionnel (3) ou par le dispositif d'éclairage additionnel (3) et le dispositif d'éclairage de base (2) est d'au moins 65 cd au point P7 situé à -8°H et 0°V et/ou d'au moins 125cd au point P8 situé à -4°H et 0°V.

7. Dispositif d'éclairage selon l'une des revendications 1 à 6, dans lequel le dispositif d'éclairage (1) comprend un dispositif de commande ou le dispositif d'éclairage (1) est associé à un dispositif de commande agencé pour activer le premier ou le deuxième état de fonctionnement du dispositif d'éclairage (1) ou pour commuter entre les deux états de fonctionnement ainsi que pour éteindre le dispositif d'éclairage (1).

8. Dispositif d'éclairage selon l'une des revendications 1 à 7, dans lequel la première répartition lumineuse de base peut être pivotée sous la forme d'un éclairage de virage statique ou dynamique, et dans lequel, dans le deuxième état de fonctionnement, le dispositif d'éclairage supplémentaire (3) est actionné de telle sorte que les valeurs d'intensité lumineuse requises pour Signlight, en particulier pour Signlight, sont satisfaites pour la première répartition lumineuse de base pivotée.

9. Projecteur de véhicule automobile comportant au moins un dispositif d'éclairage selon l'une quelconque des revendications 1 à 8.

10. Projecteur de véhicule automobile selon la revendication 9, dans lequel le projecteur de véhicule comporte un dispositif de commande agencé pour activer au moins les premier et deuxième états de fonctionnement du dispositif d'éclairage (1) ou pour commuter entre les deux états de fonctionnement ainsi que pour éteindre le dispositif d'éclairage (1).
